# EUROPÄISCHE PATENTSCHRIFT

(11) **EP 3 115 114 B1**
(45) Veröffentlichungstag und Bekanntmachung des Hinweises auf die Patenterteilung: **28.04.2021**
(21) Anmeldenummer: 16171909.1
(22) Anmeldetag: 30.05.2016
(51) Int. Cl.: B05D 3/04, B32B 5/02, B32B 5/30, B32B 7/10, B32B 7/12, B32B 29/04, E04F 15/10, B32B 5/16, B41M 3/00, B41M 7/00, B05D 5/06, B44C 5/04

(54) **VERFAHREN ZUR HERSTELLUNG EINER DEKORSCHICHT SOWIE BAUELEMENT UND VERFAHREN ZUR HERSTELLUNG EINES BAUELEMENTES**
METHOD FOR PRODUCING A DECORATIVE LAYER AND CONSTRUCTION ELEMENT AND METHOD FOR MANUFACTURING SAME
PROCEDE DE FABRICATION D'UNE COUCHE DECORATIVE ET COMPOSANT ET PROCEDE DE FABRICATION D'UN COMPOSANT

(30) Priorität: 09.07.2015 DE 102015111110
(43) Veröffentlichungstag der Anmeldung: 11.01.2017
(73) Patentinhaber: Välinge Innovation AB, 263 65 Viken (SE)
(72) Erfinder: SCHULTE, Guido, 59602 Rüthen-Meiste (DE)
(74) Vertreter: Välinge Innovation AB

(56) Entgegenhaltungen:
- WO-A1-2014/017972
- WO-A1-2014/109703
- US-A1- 2012 269 983
- US-A1- 2014 196 618

## Beschreibung

Die Erfindung betrifft ein Verfahren zur Herstellung einer Dekorschicht. Weiterhin betrifft die Erfindung ein Bauelement mit einer solchen Dekorschicht sowie ein Verfahren zur Herstellung eines Bauelementes, insbesondere eines plattenförmigen Bauelementes, vorzugsweise eines Fußbodenpaneels.

Die sogenannte Holzpuder-Technologie oder Wood Powder Technologie zur Herstellung von Dekorschichten für Faserpaneele, insbesondere Laminatfußbodenpaneelen, zählt u. a. durch die WO 2009/065769 A2 zum Stand der Technik. Das dort offenbarte Herstellungsverfahren basiert in einer bevorzugten Ausführungsform auf einer Oberflächenschicht, die Holzfasern, Aluminiumoxid und ein wärmehärtbares Harz umfasst, wobei die Oberflächenschicht in einem Pressvorgang so geformt und mit einer Basisplatte aus hochverdichtetem Fasermaterial oder einer Spanplatte so verbunden wird, dass eine Bodenplatte entsteht. Hierzu wird Holz fein zu Holzfasern zerkleinert, woraufhin die Holzfasern mit einem wärmehärtbaren Kunststoff, Farbpigmenten und Aluminiumoxid-Teilchen gemischt werden. Dieses Gemisch wird dann auf die Basisplatte aufgebracht und unter hohem Druck sowie hoher Temperatur zu einer homogenen und massiven Oberflächenschicht auf der Basisplatte geformt und so eine Bodenplatte hergestellt.

Bei dem aus der EP 2 212 071 B1 bekannten Verfahren steht die Wiederverwertung von Laminatfußböden im Vordergrund. Die Laminatfußbodenpaneele werden fein zerkleinert und die Partikel anschließend mit einem Melamin-Formaldehyd-Bindemittel gemischt. Aus diesem Gemisch wird dann ein schichtförmiges Material gepresst.

Die EP 2 523 804 B1 offenbart ein Verfahren zum Herstellen einer verschleißbeständigen Oberflächenschicht. Hierzu wird eine Trockenpulverschicht auf eine Trägerlage aufgetragen. Die Trockenpulverschicht besteht aus aufgeschlossenen Fasern, einem Bindemitteln, Pigmenten und verschleißbeständigen Partikeln. Die auf der Trägerlage aufgetragene Trockenpulverschicht wird anschließend ausgehärtet zu einer blass gefärbten verschleißbeständigen Schicht. Dies erfolgt unter Wärme- und Druckeinfluss auf die Mischung.

Schwierig ist eine dekorative Gestaltung einer solchen Oberfläche.

Aus der WO 2014/017972 A1 ist ein Verfahren zur Herstellung einer Dekorschicht bekannt, bei welchem eine Trägerlage in zumindest einem Bereich mit einer Flüssigkeit benetzt wird, worauf ein Pulver auf die Trägerlage aufgebracht wird und das Pulver in benetztem Bereich haftet und anschließend nicht-haftendes Pulver von der Trägerlage entfernt wird, wonach das anhaftende Pulver auf der Trägerlage fixiert wird.

Vergleichbare Verfahren gehören auch durch die WO 2014/109703 A1 sowie die US 2014/0196618 A1 oder die US 2012/0269983 A1 zum Stand der Technik.

Der Erfindung liegt ausgehend vom Stand der Technik die Aufgabe zugrunde, ein vorteilhaftes und rationelles Verfahren zur Herstellung einer Dekorschicht zu schaffen, sowie ein produkttechnisch vorteilhaftes Bauelement und ein Verfahren zur Herstellung eines solchen Bauelementes aufzuzeigen.

Die Lösung des die Herstellung einer Dekorschicht betreffenden Teils der Aufgabe zeigt Anspruch 1 auf.

Die Erfindung schafft ein vorteilhaftes und rationelles Verfahren zur Herstellung einer Dekorschicht. Die Dekorschicht zeichnet sich durch ihre dekorative Gestaltung ihrer Oberfläche und ihr hervorragendes Dekorbild aus. Zur Herstellung einer Dekorschicht wird eine Trägerlage in zumindest einem Bereich mit einer Flüssigkeit benetzt. Hierbei erfolgt eine gezielte Applikation von Flüssigkeit in Abhängigkeit vom Dekorbild. Bei der Flüssigkeit kann es sich um Wasser, wässrige Lösungen, Wasser versetzt mit Additiven, Netzmitteln oder Haftvermittler oder auch um eine Tinte handeln. Die Flüssigkeit im benetzten Bereich fungiert als temporärer Haftvermittler. Auf die zumindest bereichsweise mit einer Flüssigkeit benetzte Trägerlage wird dann ein Pulver aufgebracht. Das Pulver haftet im benetzten Bereich. In den nicht benetzten Bereichen liegt das Pulver lose auf und wird von der Trägerlage entfernt. Das auf der Trägerlage in den definierten Bereichen anhaftende Pulver wird anschließend fixiert.

Vorteilhafte Ausgestaltungen und Weiterbildungen des erfindungsgemäßen Verfahrens zur Herstellung einer Dekorschicht sind Gegenstand der abhängigen Ansprüche 2 bis 16.

Der Pulverauftrag auf die bereichsweise benetzte Trägerlage erfolgt vorzugsweise durch Aufstreuen. Möglich ist es auch, die benetzte Trägerlage auf eine Pulverschicht aufzulegen. In den benetzten Bereichen der Trägerlage haftet Pulver. Diese bereichsweise mit Pulver versehene Trägerlage wird dann aufgenommen und der Weiterbearbeitung zugeführt.

Die Trägerlage wird mehrmals mit Pulver versehen. Hierdurch ist eine besondere Dekorgebung möglich. Insbesondere werden auf die Trägerlage mehrere Pulver, insbesondere farblich und/oder stofflich und/oder in der Partikelgröße voneinander verschiedene Pulver, aufgetragen.

Der oder die dekorativen Bereiche auf der Trägerlage können mehrschichtig aufgebaut sein. Hierzu wird zumindest in einem Bereich nach dem Fixieren des Pulvers ganz oder partiell eine weitere Pulverschicht aufgetragen und fixiert.

Der Flüssigkeitsauftrag zum Benetzen der Trägerlage erfolgt vorzugsweise drucktechnisch beispielsweise durch einen Flüssigkeitsapplikator in Form eines Strahldruckers. Entsprechend digitaler Vorgaben für das zu übertragende Druckbild wird durch den Flüssigkeitsapplikator die Flüssigkeit gezielt in den Bereichen auf der Trägerlage aufgebracht und die Oberfläche benetzt.

In den nicht benetzten Bereichen wird das nicht haftende Pulver von der Trägerlage entfernt. Dies erfolgt durch Absaugen. Das abgesaugte Pulver kann wiederverwendet werden. Vorteilhaft lässt sich hierzu ein Staubsaugerbalken in das Verfahren bzw. die Anordnung zur Durchführung des Verfahrens integrieren.

Das auf der Trägerlage im benetzten Bereich anhaftende Pulver wird beim Fixieren gehärtet. Vorliegend wird auch ein Anhärten des Pulvers auf der Trägerlage als Härten verstanden. Das Härten erfolgt durch Wärmeeinwirkung.

Das auf der Trägerlage verbleibende Pulver bildet ein Pulverdekor. Dieses Pulver kann gegebenenfalls noch zusätzlich mit einem Wassernebel bedampft werden. Nach einer Einwirkzeit von 3 Sekunden bis 60 Sekunden wird das Pulver gehärtet. Dies erfolgt durch Wärmeeinwirkung. Insbesondere kommen hierzu Infrarotstrahler zur Anwendung.

Als Trägerlage kommen bevorzugt Lagen auf Papierbasis oder Vliesbasis zur Anwendung, beispielsweise ein Overlaypapier oder beharztes Overlaypapier. Für die Praxis wird eine Trägerlage vorteilhaft angesehen, bei der es sich um ein Trägerpapier handelt. Das Trägerpapier besteht aus einer Zellulose, welche nach einem Verpressen transparent wird, also eine geringe Opazität aufweist.

Es wird eine Trägerlage mit einem Gewicht zwischen einschließlich 10 g/m2 und einschließlich 250 g/m2, bevorzugt bis einschließlich 120 g/m2 verwendet.

Ein vorteilhafter Aspekt der Erfindung sieht vor, dass das Haften des Pulvers im benetzten Bereich durch die Einwirkung eines Unterdrucks unterstützt wird. Hierzu kann der Pulverauftrag auf die Trägerlage in Kombination mit einem Vakuumtisch durchgeführt werden.

Im Rahmen der Erfindung werden auch staub- und/oder puderförmige Partikel als Pulver bezeichnet. Es kommt ein Pulver zur Verwendung, welches Biomaterialpartikel enthält. Insbesondere weist das Pulver Holzpartikel auf. Der Anteil des Biomaterials im Pulver liegt zwischen 30 % und 60 %. Ferner sind im Pulver Farbpigmente, Korund und/oder Harze, insbesondere duroplastische oder aminoplastische Harze in Pulverform, enthalten.

Es wird ein Biomaterial mit einer Partikelgröße von kleiner oder gleich 500 µm verwendet.

Das Pulver kann weiterhin Netzmittel enthalten. Durch die Zugabe von Netzmitteln, insbesondere pulverförmigen Netzmitteln, kann die Befeuchtung bzw. Benetzung der Trägerlage und damit die Haftung des Pulvers auf der Trägerlage verbessert werden. Bei den Netzmitteln handelt es sich um oberflächenaktive Substanzen, die gelöst die Oberflächenspannung der beim Benetzen aufgetragenen Flüssigkeit verringern, so dass die Flüssigkeit leichter in die Trägerlage eindringen kann, wodurch die Haftung des Pulvers verbessert wird.

Das Pulver kann ferner auch Antistatika enthalten. Hierbei handelt es sich um Stoffe, welche als Additiv zugegeben werden und die statische Aufladung der ausgehärteten Oberfläche bzw. der hergestellten Dekorschicht verhindern, zumindest jedoch abschwächen. Die Antistatika verbessern das antistatische Verhalten der Dekorschicht.

Darüber hinaus kann das Pulver auch Antihaftmittel enthalten. Solche Antihaftmittel sind vorteilhaft beim Pressvorgang der Dekorschicht zur Erzeugung eines Bauelementes. Insbesondere kann durch die Antihaftmittel eine Anhaftung am Pressblech reduziert werden.

Darüber hinaus kann das Pulver zusätzlich auch noch Additive enthalten, welche das Fließverhalten und/oder die Aushärtung von Harzen verbessern. Hierbei handelt es sich um solche Harze, die entweder im Pulver selbst enthalten sind, oder um Harze, die in der Trägerlage enthalten sind.

Ein Aspekt der Erfindung sieht vor, dass die Trägerlage wärmehärtbares Harz, insbesondere aminoplastische Harze, enthält. Insbesondere ist die Trägerlage mit Harz getränkt oder imprägniert.

Auch kann die Trägerlage Fasermaterialien, beispielsweise Glasfasern oder ähnliche Mittel zur Stabilitätserhöhung, insbesondere der Dimensionsstabilität, enthalten.

Die Weiterverwendung der erfindungsgemäßen Dekorschicht, insbesondere bei der Herstellung von Bauelementen, kann dadurch verbessert werden, dass in die Dekorschicht zumindest eine Passermarke eingearbeitet wird. Solche Passermarken werden auch als optische Referenzpunkte bezeichnet. Insbesondere werden die Passermarken beim Auftrag des Pulvers aufgebracht.

In einer weiteren bevorzugten Ausgestaltungsvariante kann die Dekorschicht dann mit der Trägerlage verpresst werden. Dabei entsteht insbesondere eine Dekorlage mit nur geringer Dicke. Diese Dekorlage kann dann als flächiger Schichtstoff bzw. Beschichtung weiterverarbeitet werden. Beispielsweise kann die Dekorlage auf Bauelemente aufgeklebt werden. Insbesondere ist es möglich, die Dekorlage auch auf gerundete oder gewölbte Oberflächen aufzukleben. Im Sinne der Erfindung ist es jedoch auch möglich, dass bereits die verpresste Dekorlage eine Verprägung bzw. Strukturierung, mithin eine dreidimensionale Oberflächengestaltung, erfährt, auch als Profilierung oder Maserung bezeichnet. Entsprechend nachfolgenden Ausführungen zum Verpressen des Bauelementes gelten die Dekorlage entsprechend, insbesondere die Verwendung eines Harzes.

Die Dekorlage weist selbst eine Dicke von nur wenigen Millimetern, insbesondere 0,5 bis 2,5 mm, bevorzugt 1 bis 2 mm auf.

Auch ist es im Sinne der Erfindung vorstellbar, dass die Dekorschicht direkt mit einer weiteren Lage, bevorzugt auch mehreren weiteren Lagen, wobei die Lagen beispielsweise ein Kraftpapier oder ein sonstiges Vliesmaterial sein können, verpresst wird. Auch kann zunächst die Dekorlage verpresst werden und anschließend diese verpresste Dekorlage dann mit einer weiteren Lage verpresst werden.

Eine Besonderheit der Erfindung ist es, dass bei dem Pressverfahren der Dekorlage direkt eine dreidimensionale Verprägung bzw. Profilierung der Oberfläche vorgenommen wird. Dies wird insbesondere bei einem gleichzeitigen Verpressen mit mindestens einer weiteren Lage derart vorgenommen, dass dabei eine Struktur, insbesondere synchrongenaue Struktur, erzeugt wird. Dies bedeutet, dass die dreidimensionale Formgebung der Oberfläche, beispielsweise die Maserung, passend ist zu dem darunter befindlichen Dekorbild ist. Das Dekorbild wird durch die Anordnung des Pulvers vorgegeben.

Zum Verpressen kann die Dekorschicht von einem Harz, beispielsweise duroplastisch oder aminoplastischen Harzen, durchtränkt sein. Es kann jedoch auch eine vorbeschichtete Trägerlage verwendet werden. Alternativ oder optional ergänzend kann auch ein zusätzliches Kraftpapier bzw. Vliesmaterial verwendet werden, welches vorbeschichtet bzw. vorgetränkt ist, mit welcher die Dekorschicht zur Dekorlage verpresst wird.

Bei einem erfindungsgemäßen Bauelement handelt es sich insbesondere um ein plattenförmiges Bauelement, vorzugsweise um ein Fußbodenpaneel (Anspruch 17). Das Bauelement weist eine Dekorschicht, hergestellt nach einem erfindungsgemäßen Verfahren, auf. Ein solches Bauelement zeichnet sich durch seine Dekorschicht und das optisch brillante Dekorbild aus.

Zur Herstellung eines Bauelementes entsprechend Anspruch 18 wird eine erfindungsgemäß hergestellte Dekorschicht bereitgestellt. Die Dekorschicht wird oberseitig auf eine Basisplatte aufgebracht und fest mit der Basisplatte verbunden. Hierbei wird die Dekorschicht insbesondere mit der Basisplatte verpresst.

Bei der Basisplatte kann es sich beispielsweise um eine Platte aus einem verdichteten Faserwerkstoff oder um eine Holzplatte, Spanholzplatte oder um eine Platte auf Basis eines mineralischen Werkstoffes oder um eine Platte aus Wood-Plastic-Composites (WPC), Kunststoffplatte, zum Beispiel aus Polyvinylchlorid (PVC), Polypropylen (PP) oder ähnliche handeln. Insbesondere ist die Basisplatte wasserfest.

Die Dekorschicht wird oberseitig bzw. sichtseitig auf die Basisplatte aufgebracht. Hierbei wird die Dekorschicht vollflächig mit einer Flachseite der Basisplatte verbunden.

In vorteilhafter Weise wird unterseitig der Basisplatte ein Gegenzug vorgesehen.

Das optische Erscheinungsbild kann dadurch gesteigert werden, dass die Dekorschicht mittels eines profilierten Pressblechs mit einer Basisplatte gefügt wird. Hierbei wird die Dekorschicht synchron zur Profilierung des Pressblechs orientiert.

Weiterhin vorteilhaft ist, wenn die Dekorschicht von einem Harz durchtränkt wird. Hierbei ist insbesondere duroplastisches Harz in dem Pulvergemisch in ausreichender Menge vorhanden. Möglich ist es auch, dass die Trägerlage mit Harz imprägniert ist. Das Harz und insbesondere dessen Farbgebung sind auf die zu erzeugende Dekorschicht abgestimmt. Üblicherweise wird das Harz nach dem Aushärten transparent. Selbstverständlich ist es möglich, dass das Harz eine Eigenfarbe nach dem Verpressen behält.

Ein hervorzuhebender Vorteil ergibt sich dadurch, dass das Pulvergemisch abriebfeste Partikel, insbesondere Korund, enthält. Hierdurch ist die erzeugte Dekorschicht von sich aus bereits sehr abriebfest. Auf einen zusätzlichen Auftrag einer transparenten Schutzschicht, beispielsweise eines Overlayfilms oder eines UV-Lacks, kann je nach Verwendung der Dekorschicht und Einsatz des Bauelementes verzichtet werden.

In einer vorteilhaften Ausgestaltung kommt eine vorbeschichtete Basisplatte zur Anwendung. Insbesondere weist die Basisplatte eine Grundierung auf. Auch kann die Basisplatte mit einer Pulverschicht versehen sein. Auch eine Akzentuierung durch einen Auftrag von Pulver bereichsweise auf einer Flachseite, insbesondere der Oberseite der Basisplatte, ist möglich.

Ein Aspekt der Erfindung zur Herstellung eines Bauelementes, insbesondere eines plattenförmigen Bauelementes, vorzugsweise eines Fußbodenpaneels, sieht vor, dass eine Basisplatte bereitgestellt wird, welche insbesondere auf der oberen Flachseite ebenfalls mit Pulver belegt, insbesondere bestreut, ist. Das Pulver auf der Basisplatte kann vorgehärtet werden. Auf dieses Halbzeug, also Basisplatte mit oberseitiger Pulverschicht bzw. partieller Pulverschicht, wird dann die Dekorschicht aufgelegt. Die sehr dünne Trägerlage der Dekorschicht wird beim Pressvorgang transparent. Hierdurch ist die Trägerlage beim fertigen Bauelement nicht mehr sichtbar. Die Pulverschicht bzw. Pulverlage auf der Basisplatte und das Pulver der Dekorschicht verschmelzen beim Verpressen zu einer Schicht mit einem sichtbaren Dekor.

Die Erfindung ist nachfolgend anhand eines Ausführungsbeispiels näher beschrieben. Es zeigen:
- Figur 1: technisch vereinfacht das Schema eines erfindungsgemäßen Verfahrensablaufs und
- Figur 2: ebenfalls in einer schematischen Darstellung die Vorgehensweise zum mehrmaligen Auftrag eines Pulvers auf eine Trägerlage.

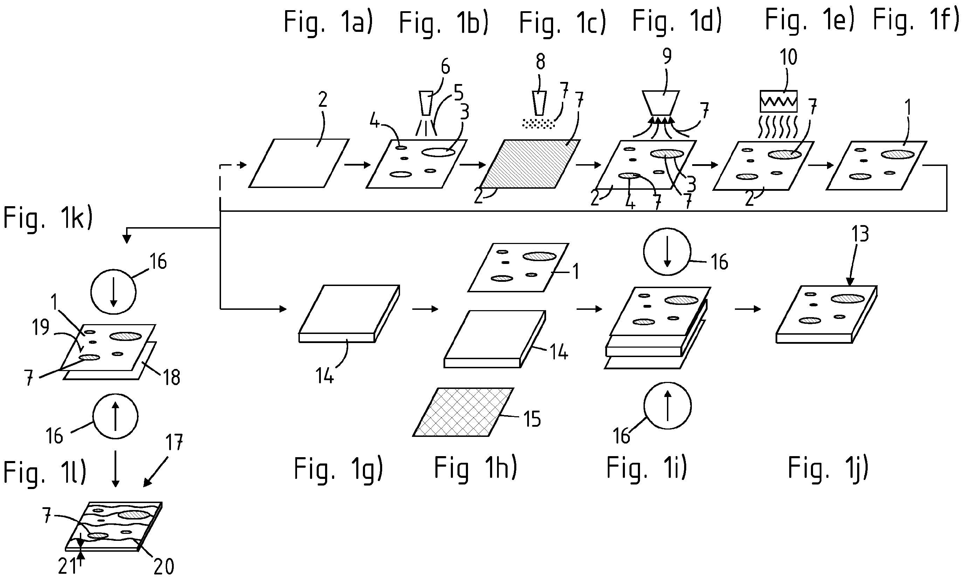

In Figur 1 ist der schematische Ablauf des Verfahrens zur Herstellung einer Dekorschicht 1 dargestellt.

Zur Herstellung der Dekorschicht 1 wird zunächst eine Trägerlage 2 bereitgestellt (Schritt a)). Die Trägerlage 2 besteht aus einem Trägerpapier, insbesondere einer Spezialzellulose oder auch aus einem Vlies. Möglich sind Vliese aus Naturfasern oder Vliese aus Chemiefasern. Ein Chemiefaservlies kann aus Mikrofilamenten aufgebaut sein, vorzugsweise auf Basis von Polyethylenterephthalat (PET) und/oder Polyamid (PA).

Die Trägerlage 2 wird in einem oder mehreren definierten Bereichen 3, 4 mit einer Flüssigkeit 5 benetzt. Der Auftrag der Flüssigkeit 5 zum Benetzten der Bereiche 3, 4 erfolgt mittels eines digitalen Druckapparates bzw. Flüssigkeitsapplikators 6 (Schritt b)).

Als nächstes wird auf die Trägerlage 2 ein Pulver 7 aufgebracht, insbesondere aufgestreut (Schritt c)). Der Auftrag des Pulvers 7 erfolgt vollflächig auf die mit

Flüssigkeit 5 benetzte Oberseite der Trägerlage 2 mittels einer Streueinrichtung 8. In den benetzten Bereichen haftet das Pulver auf der Trägerlage. In den nicht benetzten Bereichen liegt das Pulver lose auf. Mittels eines Staubsaugerbalkens 9 wird das nicht haftende Pulver 7 von der Trägerlage 2 entfernt (Schritt d)). Das entfernte Pulver 7 kann wiederverwendet werden.

Als nächstes wird das auf der Trägerlage 2 haftende Pulver 7 fixiert (Schritt e)). Hierzu werden die Trägerlage 2 und das darauf befindliche Pulver 7 mittels eines Infrarotstrahlers 10 gehärtet. Nach dem Fixiervorgang ist die Dekorschicht 1 fertig. Man erhält eine Dekorschicht 1 mit einer brillanten optischen Charakteristik und vorteilhaftem Dekorbild. Eine fertige Dekorschicht 1 zeigt Schritt f). Die Dekorschicht 1 kann dann der weiteren Verarbeitung zur Herstellung eines Bauelementes (Schritt g) bis j)) zugeführt werden.

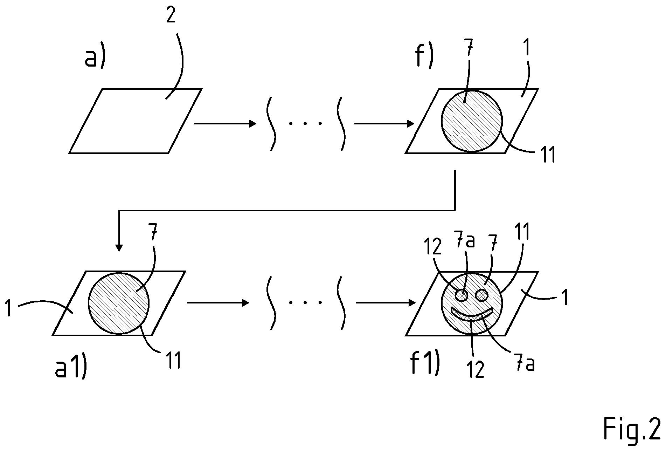

Ein Aspekt sieht vor, dass die Dekorschicht 1 nochmals gleichartig behandelt wird. Hierbei wird auf die Trägerlage 2 mehrmals Pulver 7, 7a aufgetragen. Insbesondere werden auf die Trägerlage 2 mehrere Pulver 7, 7a, insbesondere farblich und/oder stofflich und/oder in der Partikelgröße voneinander verschiedene Pulver 7, 7a, aufgetragen. Dies ist zusätzlich in der Darstellung der Figur 2 verdeutlicht. Die bereits in einem Bereich 11 mit einem Pulver 7 versehene Dekorschicht 1 wird nochmals entsprechend der Verfahrensschritte a) bis f) mit einer oder weiterer mehrerer Lagen von Pulver 7a beschichtet. Hierzu werden in dem Bereich 11 nach dem Fixieren des Pulvers 7 weitere Bereiche 12 mit Pulver 7a versehen und diese anschließend fixiert.

Die Dekorschicht 1 wird für die Herstellung von Bauelementen 13, vorzugsweise Fußbodenpaneelen, verwendet. Hierbei bildet die Dekorschicht 1 die dekorgebende Sicht- und Nutzschicht oberseitig des Bauelementes 13. Die Herstellung ist anhand der Verfahrensschritte g) bis j) verdeutlicht. Eine Basisplatte 14 wird bereitgestellt (Schritt g)). Oberseitig wird die Dekorschicht 1 angeordnet. Unterseitig der Basisplatte 14 ist ein Gegenzug 15 vorgesehen (Schritt h)). Der Mehrschichtkörper aus Basisplatte 14, oberseitiger Dekorschicht 1 und unterseitigem Gegenzug 15 wird dann in einer Presse 16, üblicherweise einer Kurztaktpresse, verpresst (Schritt i)). In der Kurztaktpresse 16 kommen profilierte Pressbleche zum Einsatz. Beim Pressvorgang wird die Dekorschicht 1 synchron zur Profilierung des Pressblechs orientiert. Hierzu sind in der Dekorschicht 1 Passermarken, welche als optische Referenzpunkte fungieren, integriert. Die übliche Presszeit beträgt 10 Sekunden bis 100 Sekunden. Man erhält ein hartes, hochbelastbares Bauelement 13 (Schritt j)). Beim Pressvorgang wird die Dekorschicht 1 von Harz durchtränkt.

Alternativ ist es auch möglich, nach dem Verfahrensschritt von Figur 1f), mithin nach Bereitstellen der Dekorschicht 1, nur die Dekorschicht 1 zu einer Dekorlage 17 zu verpressen, wie in Figur 1k) dargestellt. Optional ergänzend kann mindestens eine weitere Lage 18, jedoch auch mehrere nicht näher dargestellte Lagen, mit der Dekorschicht 1 verpresst werden. Bei den weiteren Lagen 18 kann es sich beispielsweise um ein Kraftpapier oder auch um ein Vlies handeln. Als besonderer Vorteil der Erfindung kann bereits in dem in Figur 1k) dargestellten Schritt des Verpressens der Dekorlage 17 eine Verprägung bzw. Profilierung der Oberfläche 19 erfolgen, so dass, wie in Figur 1l) dargestellt, eine Maserung 20 auf der Oberfläche vorhanden ist. Insbesondere ist diese Maserung 20 derart synchron zu den durch das Pulver 7 bedeckten Bereichen ausgebildet. Die Dekorlage 17 kann dann in einem weiteren nicht näher dargestellten Verarbeitungsschritt beispielsweise auf ein Bauelement aufgeklebt werden. Die Dekorlage 17 kann auch als flächiger Schichtstoff bezeichnet werden. Sie weist eine nur geringe Dicke 21 von wenigen Millimetern auf und ist insbesondere biegsam, um auch auf gerundeten Oberflächen aufgebaut zu werden.

Die Darstellung in der Figur 1 ebenso wie in der Figur 2 ist nicht maßstäblich zu verstehen. Das Bauelement 13 wird anschließend konfektioniert. Insbesondere werden aus dem Bauelement 13 Fußbodenpaneele hergestellt, die randseitig profiliert und insbesondere mit Nut und Federn oder auch mit sogenannten Klickverbindungsmitteln versehen sind.

### Bezugszeichen:

1 - Dekorschicht
2 - Trägerlage
3 - Bereich
4 - Bereich
5 - Flüssigkeit
6 - Flüssigkeitsapplikator
7 - Pulver
7a - Pulver
8 - Streueinrichtung
9 - Staubsaugerbalken
10 - Infrarotstrahler
11 - Bereich
12- Bereich
13 - Bauelement
14- Basisplatte
15- Gegenzug
16 - Presse
17 - Dekorlage
18 - weitere Lage
19 - Oberfläche
20 - Maserung
21 - Dicke

## Patentansprüche

1. Verfahren zur Herstellung einer Dekorschicht (1), bei welchem eine Trägerlage (2) in zumindest einem Bereich (3, 4) mit einer Flüssigkeit (5) benetzt wird, worauf ein Pulver (7, 7a) auf die Trägerlage (2) aufgebracht wird und das Pulver (7, 7a) im benetzten Bereich (3, 4) haftet und anschließend nicht haftendes Pulver von der Trägerlage (2) entfernt wird, wonach das anhaftende Pulver (7, 7a) auf der Trägerlage (2) fixiert wird, **dadurch gekennzeichnet, dass** eine Trägerlage (2) mit einem Gewicht zwischen einschließlich 10 g/m2 und einschließlich 250 g/m2 verwendet wird und ein Pulver (7, 7a) verwendet wird, welches Biomaterialpartikel in einem Anteil zwischen 30 % und 60 % sowie Farbpigmente, Korund und duroplastische Harze in Pulverform enthält und das Biomaterial eine Partikelgröße von kleiner oder gleich 500 µm aufweist, wobei auf die Trägerlage (2) mehrmals Pulver (7, 7a) aufgetragen wird und auf die Trägerlage (2) mehrere voneinander verschiedene Pulver (7, 7a) aufgetragen werden und nicht haftendes Pulver von der Trägerlage (2) durch absaugen entfernt wird sowie das auf der Trägerlage (2) anhaftende Pulver (7, 7a) beim Fixieren gehärtet wird, wobei die Fixierung des auf der Trägerlage (2) anhaftenden Pulvers (7, 7a) durch Wärmeeinwirkung durchgeführt wird.

2. Verfahren nach Anspruch 1, **dadurch gekennzeichnet, dass** auf die Trägerlage (2) mehrere farblich und/oder stofflich und/oder in der Partikelgröße voneinander verschiedene Pulver (7, 7a) aufgetragen werden.

3. Verfahren nach Anspruch 1 oder 2, **dadurch gekennzeichnet, dass** zumindest in einem Bereich (11) nach dem Fixieren des Pulvers (7) ganz oder partiell eine weitere Pulverschicht aufgetragen und fixiert wird.

4. Verfahren nach wenigstens einem der Ansprüche 1 bis 3, **dadurch gekennzeichnet, dass** der Flüssigkeitsauftrag drucktechnisch erfolgt.

5. Verfahren nach wenigstens einem der Ansprüche 1 bis 4, **dadurch gekennzeichnet, dass** die Fixierung des auf der Trägerlage (2) anhaftenden Pulvers (7, 7a) durch Wärmeeinwirkung mittels IR-Strahlung durchgeführt wird.

6. Verfahren nach wenigstens einem der Ansprüche 1 bis 5, **dadurch gekennzeichnet, dass** eine Trägerlage (2) auf Papierbasis oder Vliesbasis verwendet wird.

7. Verfahren nach wenigstens einem der Ansprüche 1 bis 6, **dadurch gekennzeichnet, dass** eine Trägerlage (2) mit einem Gewicht bis 120 g/m2 verwendet wird.

8. Verfahren nach wenigstens einem der Ansprüche 1 bis 7, **dadurch gekennzeichnet, dass** das Haften des Pulvers im benetzten Bereich durch die Einwirkung eines Unterdrucks unterstützt wird.

9. Verfahren nach wenigstens einem der Ansprüche 1 bis 8, **dadurch gekennzeichnet, dass** die Biomaterialpartikel Holzpartikel sind.

10. Verfahren nach einem der Ansprüche 1 bis 9, **dadurch gekennzeichnet, dass** das Pulver (7, 7a) Netzmittel enthält.

11. Verfahren nach einem der Ansprüche 1 bis 10, **dadurch gekennzeichnet, dass** das Pulver (7, 7a) Antistatika enthält.

12. Verfahren nach mindestens einem der Ansprüche 1 bis 11, **dadurch gekennzeichnet, dass** das Pulver (7, 7a) Antihaftmittel enthält.

13. Verfahren nach mindestens einem der Ansprüche 1 bis 12, **dadurch gekennzeichnet, dass** das Pulver (7, 7a) Additive enthält, welche das Fließverhalten und/oder die Aushärtung von Harzen verbessern.

14. Verfahren nach wenigstens einem der Ansprüche 1 bis 13, **dadurch gekennzeichnet, dass** in die Dekorschicht (1) zumindest eine Passermarke eingearbeitet wird.

15. Verfahren nach einem der Ansprüche 1 bis 14, **dadurch gekennzeichnet, dass** die Dekorschicht (1) mit der Trägerlage (2) verpresst wird, insbesondere zu einer Dekorlage (17), bevorzugt wird die Dekorschicht (1) mit einer weiteren Lage (18) verpresst, wobei die weitere Lage (18) insbesondere ein Kraftpapier oder Vlies ist.

16. Verfahren nach Anspruch 15, **dadurch gekennzeichnet, dass** beim Verpressen die Oberfläche (19) der Dekorlage (17) dreidimensional geprägt wird, insbesondere wird eine Maserung (20) und/oder Profilierung der Oberfläche (19) synchron zu dem auf der Trägerlage (2) befindlichen Pulver (7, 7a) verpresst.

17. Bauelement, insbesondere plattenförmiges Bauelement, vorzugsweise Fußbodenpaneel, mit einer Dekorschicht (1) hergestellt durch ein Verfahren gemäß einem der Ansprüche 1 bis 16.

18. Verfahren zur Herstellung eines Bauelements (13), insbesondere eines plattenförmigen Bauelements, vorzugsweise eines Fußbodenpaneels, mit einer Dekorschicht hergestellt durch ein Verfahren gemäß einem der Ansprüche 1 bis 16, **dadurch gekennzeichnet, dass** die Dekorschicht (1) auf eine Basisplatte (14) aufgebracht wird, insbesondere die Dekorschicht (1) mit der Basisplatte (14) verpresst wird.

19. Verfahren nach Anspruch 18, **dadurch gekennzeichnet, dass** unterseitig der Basisplatte (14) ein Gegenzug (15) vorgesehen wird.

20. Verfahren nach Anspruch 18 oder 19, **dadurch gekennzeichnet, dass** die Dekorschicht (1) mittels eines profilierten Pressblechs mit einer Basisplatte (14) gefügt wird, wobei die Dekorschicht (1) synchron zur Profilierung des Pressblechs orientiert wird.

21. Verfahren nach einem der Ansprüche 18 bis 20, **dadurch** g e k e n n z e **ich**n e t, dass die Dekorschicht (1) von einem Harz durchtränkt wird.

22. Verfahren nach einem der Ansprüche 18 bis 21, **dadurch gekennzeichnet, dass** eine vorbeschichtete Basisplatte (14) verwendet wird.

23. Verfahren nach einem der Ansprüche 18 bis 22, **dadurch gekennzeichnet, dass** die Basisplatte (14) vor dem Aufbringen der Dekorschicht (1) zumindest bereichsweise mit Pulver (7, 7a) versehen wird und dieses Pulver vorzugsweise fixiert wird.

## Claims

1. A method for producing a decorative coating (1), wherein a support layer (2) is wetted with a liquid (5) in at least one region (3, 4), then a powder (7, 7a) is applied to the support layer (2), wherein the powder (7, 7a) adheres in the wetted region (3, 4), and subsequently non-adhering powder is removed from the support layer (2), whereupon the adhering powder (7, 7a) is fixed to the support layer (2), **characterized in that** a support layer (2) with a weight between 10 g/m² and 250 g/m² inclusive is employed and a powder (7, 7a) is employed which contains biomaterial particles in a proportion between 30 % and 60 % as well as colour pigments, corundum and thermosetting resins in powder form and the biomaterial has a particle size of less than or equal to 500 µm, powder (7, 7a) being applied to the support layer (2) plural times and a plurality of mutually different powders (7, 7a) are applied to the support layer (2) and non-adherent powder is removed from the support layer (2) by suction and the powder (7, 7a) adhering to the support layer (2) is hardened during fixing, wherein the fixing of the powder (7, 7a) adhering to the support layer (2) being carried out by applying heat.

2. The method according to claim 1, **characterized in that** a plurality of powders (7, 7a) of different colour and/or material and/or particle size are applied to the support layer (2).

3. The method according to claims 1 or 2, **characterized in that** in at least one area (11) another powder layer is applied and fixed completely or partially after the powder (7) has been fixed.

4. Method according to at least one of claims 1 to 3, **characterized in that** the liquid is applied by means of printing techniques.

5. Method according to at least one of claims 1 to 4, **characterized in that** the fixing of the powder (7, 7a) adhering to the support layer (2) is carried out by applying heat by means of infrared radiation.

6. Method according to at least one of claims 1 to 5, **characterized in that** a paper-based or nonwoven-based support layer (2) is employed.

7. Method according to at least one of claims 1 to 6, **characterized in that** a support layer (2) with a weight of up to 120 g/m² is employed.

8. Method according to at least one of claims 1 to 7, **characterized in that** the adhesion of the powder in the wetted area is assisted by a negative pressure.

9. Method according to at least one of claims 1 to 8, **characterized in that** the biomaterial particles are wood particles.

10. Method according to one of claims 1 to 9, **characterized in that** the powder (7, 7a) contains wetting agents.

11. Method according to one of claims 1 to 10, **characterized in that** the powder (7, 7a) contains antistatic agents.

12. Method according to at least one of claims 1 to 11, **characterized in that** the powder (7, 7a) contains antistick agents.

13. Method according to at least one of claims 1 to 12, **characterized in that** the powder (7, 7a) contains additives which improve the flow behaviour and/or the curing of resins.

14. Method according to at least one of claims 1 to 13, **characterized in that** at least one register mark is incorporated into the decorative coating (1).

15. The method according to one of claims 1 to 14, **characterized in that** the decorative coating (1) is laminated with the support layer (2), in particular to a decorative layer (17), preferably the decorative coating (1) is laminated with a further layer (18), the further layer (18) being in particular a kraft paper or nonwoven.

16. The method according to claim 15, **characterized in that** during laminating the surface (19) of the decorative layer (17) is embossed three-dimensionally, in particular a grain (20) and/or profile of the surface (19) is laminated synchronously with the powder (7, 7a) provided on the support layer (2).

17. A construction element, in particular a plate-shaped construction element, preferably a flooring panel with a decorative coating (1) produced by a method according to any one of claims 1 to 16.

18. A method for manufacturing a construction element (13), in particular a plate-shaped construction element, preferably a floor panel, with a decorative coating produced by a method according to one of claims 1 to 16, **characterized in that** the decorative coating (1) is applied to a base plate (14), in particular the decorative coating (1) is laminated with the base plate (14).

19. The method according to claim 18, **characterized in that** a counteracting backing layer (15) is provided at the underside of the base plate (14).

20. The method according to claims 18 or 19, **characterized in that** the decorative coating (1) is laminated with a base plate (14) by means of a profiled pressure plate, wherein the decorative coating (1) is aligned synchronously with the profiling of the press plate.

21. The method according to one of claims 18 to 20, **characterized in that** the decorative coating (1) is impregnated with a resin.

22. The method according to one of claims 18 to 21, **characterized in that** a pre-coated base plate (14) is employed.

23. The method according to one of claims 18 to 22, **characterized in that**, before the decorative coating (1) is applied, the base plate (14) is at least partially provided with powder (7, 7a), and this powder is preferably fixed.

## Revendications

1. Procédé de production d'une couche décorative (1), où une assise de support (2) est humidifiée avec un liquide (5) dans au moins une zone (3, 4), après quoi une poudre (7, 7a) est appliquée sur l'assise de support (2) et la poudre (7, 7a) adhère dans la zone mouillée (3, 4) puis la poudre non adhérente est retirée de l'assise de support (2), après quoi la poudre adhérente (7, 7a) est fixée sur l'assise de support (2), **caractérisé en ce qu'**une assise de support (2) d'un poids entre 10 g/m2 inclus et 250 g/m2 inclus est utilisée et une poudre (7, 7a) qui contient des particules de biomatériau en une proportion entre 30% et 60% ainsi que des pigments colorés, du corindon et des résines thermodurcissables sous forme de poudre est utilisée et le biomatériau présente une granulométrie inférieure ou égale à 500 µm, où la poudre (7, 7a) est appliquée plusieurs fois sur l'assise de support (2) et plusieurs poudres (7, 7a) différentes les unes des autres sont appliquées sur l'assise de support (2) et la poudre non adhérente est retirée de l'assise de support (2) par aspiration et la poudre (7, 7a) adhérant à l'assise de support (2) est durcie lors de la fixation, où la fixation de la poudre (7, 7a) adhérant sur l'assise de support (2) est réalisée par action de la chaleur.

2. Procédé selon la revendication 1, **caractérisé en ce que** plusieurs poudres (7, 7a) différentes les unes des autres en termes de couleur et/ou de matière et/ou de granulométrie sont appliquées sur l'assise de support (2).

3. Procédé selon la revendication 1 ou 2, **caractérisé en ce qu'**au moins dans une zone (11) après la fixation de la poudre (7), une autre couche de poudre est appliquée et fixée totalement ou partiellement.

4. Procédé selon au moins l'une des revendications 1 à 3, **caractérisé en ce que** l'application du liquide a lieu par une technique d'impression.

5. Procédé selon au moins l'une des revendications 1 à 4, **caractérisé en ce que** la fixation de la poudre (7, 7a) adhérant sur l'assise de support (2) est réalisée par action de la chaleur au moyen d'un rayonnement IR.

6. Procédé selon au moins l'une des revendications 1 à 5, **caractérisé en ce qu'**une assise de support (2) à base de papier ou à base de non-tissé est utilisée.

7. Procédé selon au moins l'une des revendications 1 à 6, **caractérisé en ce qu'**une assise de support (2) d'un poids de jusqu'à 120 g/m2 est utilisée.

8. Procédé selon au moins l'une des revendications 1 à 7, **caractérisé en ce que** l'adhérence de la poudre dans la zone humidifiée est favorisée par l'action d'une dépression.

9. Procédé selon au moins l'une des revendications 1 à 8, **caractérisé en ce que** les particules de biomatériau sont des particules de bois.

10. Procédé selon l'une des revendications 1 à 9, **caractérisé en ce que** la poudre (7, 7a) contient des agents mouillants.

11. Procédé selon l'une des revendications 1 à 10, **caractérisé en ce que** la poudre (7, 7a) contient des agents antistatiques.

12. Procédé selon au moins l'une des revendications 1 à 11, **caractérisé en ce que** la poudre (7, 7a) contient des agents antiadhésifs.

13. Procédé selon au moins l'une des revendications 1 à 12, **caractérisé en ce que** la poudre (7, 7a) contient des additifs qui améliorent le comportement d'écoulement et/ou le durcissement des résines.

14. Procédé selon au moins l'une des revendications 1 à 13, **caractérisé en ce qu'**au moins une marque de repérage est incorporée dans la couche décorative (1).

15. Procédé selon l'une des revendications 1 à 14, **caractérisé en ce que** la couche décorative (1) est pressée avec l'assise de support (2), en particulier en une assise décorative (17), de préférence la couche décorative (1) est pressée avec une autre assise (18), où l'autre assise (18) est en particulier un papier kraft ou un non-tissé.

16. Procédé selon la revendication 15, **caractérisé en ce que** lors du pressage la surface (19) de l'assise décorative (17) est gaufrée en trois dimensions, en particulier une veinure (20) et/ou un profilage de la surface (19) est pressé de manière synchrone avec la poudre (7, 7a) située sur l'assise de support (2).

17. Elément de construction, en particulier élément de construction en forme de plaque, de préférence panneau de plancher, avec une couche décorative (1) produite par un procédé selon l'une des revendications 1 à 16.

18. Procédé de production d'un élément de construction (13), en particulier d'un élément de construction en forme de plaque, de préférence d'un panneau de plancher, avec une couche décorative produite par un procédé selon l'une des revendications 1 à 16, **caractérisé en ce que** la couche décorative (1) est appliquée sur une plaque de base (14), en particulier la couche décorative (1) est pressée avec la plaque de base (14).

19. Procédé selon la revendication 18, **caractérisé en ce qu'**une contrepartie (15) est prévue sur le côté inférieur de la plaque de base (14).

20. Procédé selon la revendication 18 ou 19, **caractérisé en ce que** la couche décorative (1) est jointe au moyen d'une plaque de presse profilée à une plaque de base (14), où la couche décorative (1) est orientée de manière synchrone avec le profilage de la plaque de presse.

21. Procédé selon l'une des revendications 18 à 20, **caractérisé en ce que** la couche décorative (1) est imprégnée d'une résine.

22. Procédé selon l'une des revendications 18 à 21, **caractérisé en ce qu'**une plaque de base (14) pré-enduite est utilisée.

23. Procédé selon l'une des revendications 18 à 22, **caractérisé en ce que** la plaque de base (14) est pourvue de poudre (7, 7a) au moins par zones avant l'application de la couche décorative (1), et cette poudre est de préférence fixée.
